# EUROPEAN PATENT SPECIFICATION

(11) **EP 1 319 543 B1**
(45) Date of publication and mention of the grant of the patent: **19.10.2005**
(21) Application number: 02026364.6
(22) Date of filing: 25.11.2002
(51) Int. Cl.: B60H 3/00

(54) **Diffuser for deodorizing products to be applied to vehicle vent-holes**
Düftungsgerät zur Anwendung bei Fahrzeugbelüftungsöffnungen
Diffuseur de produits déodorants utilisé près des ouvertures de ventilation d'un véhicule

(30) Priority: 14.12.2001 IT MI20010654 U
(43) Date of publication of application: 18.06.2003
(73) Proprietor: De Leuriks B.V., 1016 DT Amsterdam (NL)
(72) Inventor: Van der Linden-Douw, Jolande Emilie, 2807 KT Gouda (NL)
(74) Representative: La Ciura, Salvatore

(56) References cited:
- FR-A- 2 727 019
- US-A- 5 527 493
- US-A- 5 932 147
- US-A- 6 102 660
- PATENT ABSTRACTS OF JAPAN vol. 1998, no. 10, 31 August 1998 (1998-08-31) & JP 10 138752 A (SUZUKI MOTOR CORP), 26 May 1998 (1998-05-26)

## Description

This invention proposes a diffuser for deodorizing products to be applied to vent-holes, in particular of vehicles and the like.

The diffuser is planned to be used with deodorants contained into a sachet made of a membrane which is waterproof but permeable to perfumed oil and when is reached by a blast of air, looses the perfume molecules.

The diffuser shows a plurality of adjustable openings for the air access, which air is directed to lick the membrane containing the deodorant to diffuse all over the environment.

The diffuser is preferably provided with a LED fed by a tab battery contained into the diffuser and can be activated by the lever which controls the opening of the air inlet vent-holes.

Different systems to perfume the interior of vehicles or the like are well known.

For example deodorizing products are known consisting of a support in a porous material impregnated with perfumed oil which, once exposed to the air, releases the perfume in the environment.

Containers are furthermore known which are filled with deodorizing granules or paste and are closed by a cover which is partially opened to allow the perfume to spread in the environment.

These containers of different types are generally fixed to vehicle parts such as the dashboard, through a bi-adhesive ribbon, Velcro® or another similar system.

Containers are also known which are addressed to be fixed in correspondence with the vent-holes of a car and which consist of a box provided with a grille or a series of inlet ports and a series of outlet ports on the opposite wall.

These containers are generally filled with granule deodorant so that the ventilation air provides to collect the perfume and to spread the same inside the vehicle.

US5932147 describes an air freshener device adapted to be mounted on a ventilation duct of a vehicle, said freshener having. The housing input and output air ports defined in the front side and back side of the freshener body, and a fan to generate rotating, air currents in the hollow interior space of said body.

Forced air, expelled from the ventilation ducts, enters the input air ports of the housing, passes around a n air freshener pellet disposed within the housing, mixes with the expelled ventilation air and is ejected from the housing via the output air port.

Into this sector can be inserted the present invention which proposes a diffuser for deodorizing products to be applied to the vehicle vent-holes, the diffuser being provided to be used together with a deodorant packaging contained into an envelope made of a semipermeable membrane, which allows the passage of the perfumed oil molecules which, when the membrane is reached by a blast of air, get out by spreading in the environment.

The diffuser according to the invention shows on its bottom wall a plurality of adjustable air inlet vent-holes and is provided with a LED powered by a battery placed into the diffuser, which LED lights up when the air inlet vent-holes are open.

A device results therefrom which is particularly practical and efficient, simple to be assembled and which allows an easy replacement of the deodorant.

This invention will be now described in detail, by way of a non-restrictive example, with reference to the enclosed figures wherein:
- Figures 1, 2 and 3 are respectively a top view, a side view and a bottom view of the diffuser according to the invention with the cover closed;
- Figure 4 is a side view of the diffuser with the cover while it is going to open;
- Figure 5 is the top view of the diffuser with the cover opened and the envelope with the deodorant fit in;
- Figure 6 is the sectional view of the diffuser according to the invention with the air flow paths highlighted.

With reference to the figures, with reference 1 is indicated the diffuser, according to the invention, in its whole, which comprises a body 2, in this specific case having a round base, provided with coupling arms 15 of known type, for the fixing of the same on the vehicle vent-hole.

Upwardly the diffuser is closed by a cover 3 connected to the body 2 through a flexible plastic tab 4.

The body 2 shows at its base a series of openings 5 through which the air coming from the vehicle ventilation system can enter the diffuser.

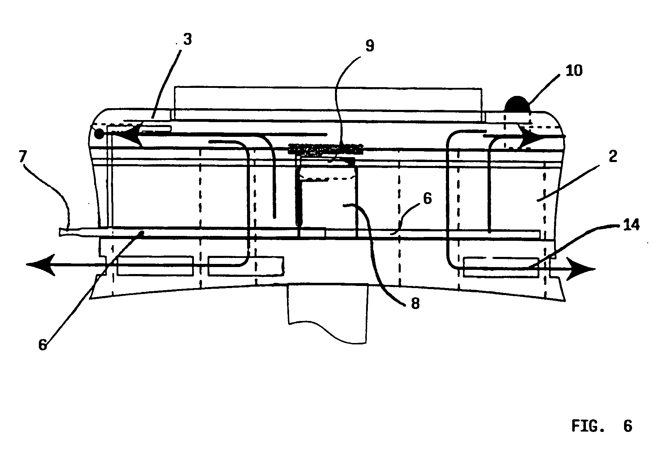

A disk 6 or the like (figure 6) provided with openings similar to the openings 5 of the diffuser, rests on the bottom of the latter and shows a tooth or a projecting lever 7, through which it is possible to rotate the disk 6 inside the diffuser to carry the same from a position wherein the openings present in the disk match with the openings 5, allowing the free passage of the air, to a position wherein the disk closes the openings 5.

In the middle of the body 2 there is a cylindrical support 8 wherein a tab battery 9 is housed which feeds a LED diode 10 housed in the body 2 and visible through a port 11 present in the cover 3.

The feeding circuit of the diode 10 is preferably closed to feed the LED, when the disk 6 is rotated by acting on the lever 7 to carry the said disk in the opening position of the air inlet ports 5.

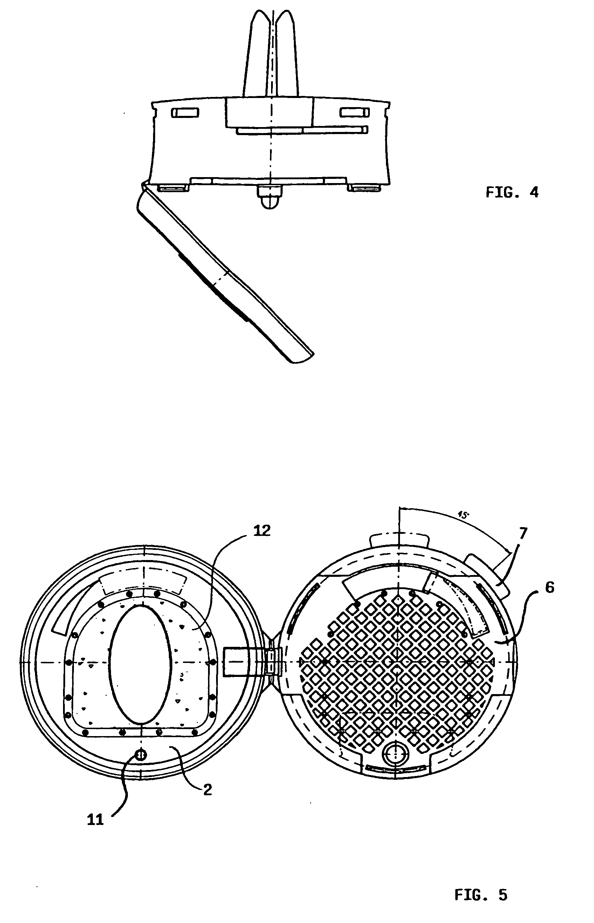

Figure 5 shows the diffuser with the deodorant sachet, set out with reference 12, fitted inside.

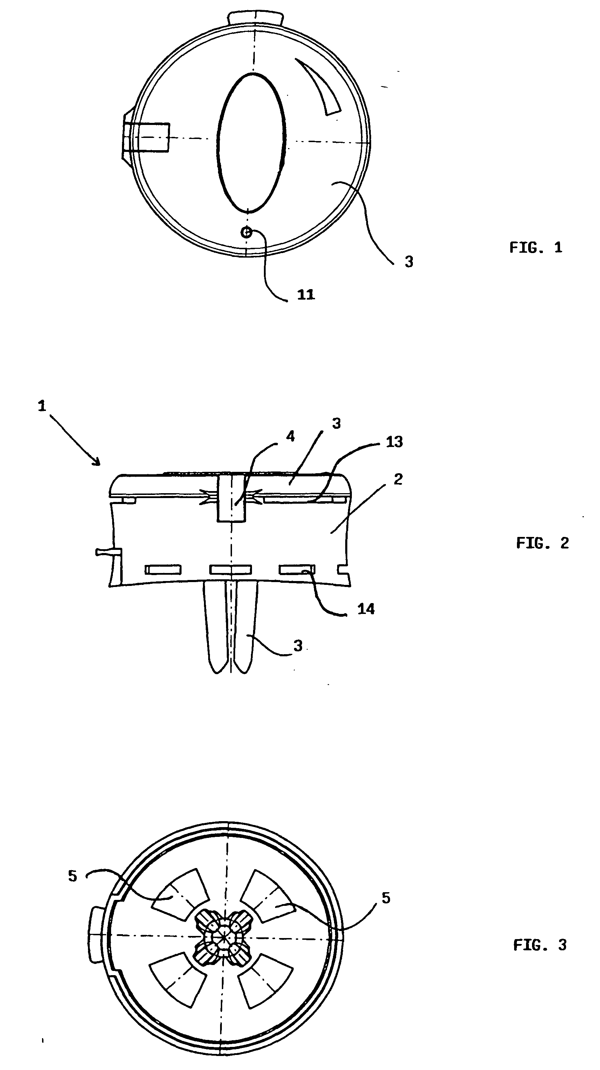

On the lateral wall of the diffuser 2 (see figure 2) there are a series of air outlet openings, indicated with reference 13, placed in the upper part and an additional series of openings 14 placed near the base of the body 2, below the disk 6.

The operation takes place as follows:

The diffuser is put into a vent-hole with its base laid on the edge of the said vent-hole where it is held by the arms 15, which engage a support usually present inside the vent-holes.

The cover 3 is opened and the semipermeable envelope containing the deodorant is put in.

Once the cover is closed, the device is ready to be used.

With the disk 6 in a closing position of the openings 5, the air flow coming from the vent-hole slowly gets out laterally through the openings 14, at the base of the diffuser, without the perfume is spread in the environment.

By rotating the disk 6 through the lever 7, the openings 5 open and the air coming from the vehicle ventilation system licks the deodorant envelope, from which, through the semipermeable membrane, the perfume molecules get out and are spread in the environment always through the openings 13.

The activation of the perfume diffusion is also announced by the lighting of the LED 10, further to the closure of the feeding circuit consequent to the rotation of the disk 6.

Different forms of execution can be provided for with reference to the same idea of solution, but the invention is only limited by the scope of the appended claims.

## Claims

1. A diffuser for deodorizing products of the type consisting of a body element (2) apt to contain a certain quantity of deodorizing product and provided with means (15) apt to allow its application in correspondence with a vehicle vent-hole, the said diffuser showing openings (5,13) for the inlet and outlet of an air flow apt to reach this deodorizing product, which is introduced inside an envelope, **characterized in that** said envelope consists of a semipermeable membrane apt to allow the passage of the perfumed oil molecules when it is reached by an air flow, and **in that** the air flow inlet openings (5) are provided for in the diffuser bottom wall, and the perfumed air outlet openings (13) in the lateral wall, near the upper edge thereof.

2. A diffuser for deodorizing products according to claim 1, **characterized in that** to control said air flow a bored disk 6 is provided, placed in contact with a wall wherein there are openings (5) for the air flow inlet, the said disk can be rotated from a first position wherein it closes the said air inlet openings to a second position wherein it opens the said openings.

3. A diffuser for deodorizing products according to claim 2 charaterized in that between the said base and the said disk (6) which closes the air inlet openings (5) there is a plurality of ports (14) drawn in a diffuser wall, apt to allow the outlet, throughout the environment, of the air flow coming from the vent-holes.

4. A diffuser for deodorizing products according anyone of the previous claims, charaterized in that luminous means (10) are provided to be activated when the diffuser is in operation.

5. A diffuser for deodorizing products according to claim 4, wherein the said luminous means consist of a LED (10) visible through the diffuser cover and fed by a battery (9) contained into the said diffuser, the feeding circuit of the said LED being closed when the said disk (6) for the opening and closing of the air flow inlets is put in an opening position thereof.

## Patentansprüche

1. Diffusor für Desodorisierungsprodukte der Art, die aus einem Körperelement (2) besteht, das geeignet ist, eine bestimmte Menge an Desodorisierungsprodukt zu enthalten, und mit einem Mittel (15) versehen ist, das geeignet ist, seine Anwendung in Übereinstimmung mit einem Fahrzeuglüftungsloch zu ermöglichen, wobei der Diffusor Öffnungen (5, 13) für den Einlass und Auslass eines Luftstroms aufweist, der geeignet ist, dieses Desodorisierungsprodukt zu erreichen, welches in eine Umhüllung eingeführt wird, **dadurch gekennzeichnet, dass** die Umhüllung aus einer semipermeablen Membran besteht, die geeignet ist, den Durchgang der Parfumölmoleküle zu ermöglichen, wenn sie von einem Luftstrom erreicht wird, und dass die Luftstrom-Einlassöffnungen (5) in der Diffusorbodenwand und die Parfumluft-Auslassöffnungen (13) in der Seitenwand nahe deren oberer Kante vorgesehen sind.

2. Diffusor für Desodorisierungsprodukte nach Anspruch 1, **dadurch gekennzeichnet, dass** zum Steuern des Luftstroms eine mit Bohrungen versehene Scheibe 6 vorgesehen ist, die mit einer Wand in Kontakt gebracht ist, in der sich Öffnungen (5) für den Luftstromeinlass befinden, wobei die Scheibe von einer ersten Position, in der sie die Lufteinlassöffnungen schließt, in eine zweite Position, in der sie die Öffnungen öffnet, gedreht werden kann.

3. Diffusor für Desodorisierungsprodukte nach Anspruch 2, **dadurch gekennzeichnet, dass** zwischen der Basis und der Scheibe (6), die die Lufteinlassöffnungen (5) schließt, eine Vielzahl von Kanälen (14) vorhanden sind, die in einer Diffusorwand gezogen sind, die geeignet sind, den Auslass des Luftstroms, der von den Lüftungslöchern kommt, an die gesamte Umgebung zu ermöglichen.

4. Diffusor für Desodorisierungsprodukte nach einem der vorangehenden Ansprüche, **dadurch gekennzeichnet, dass** Leuchtmittel (10) vorgesehen sind, um aktiviert zu werden, wenn der Diffusor in Betrieb ist.

5. Diffusor für Desodorisierungsprodukte nach Anspruch 4, wobei die Leuchtmittel aus einer LED (19) bestehen, die durch die Diffusorabdeckung sichtbar ist und durch eine Batterie (9) gespeist wird, die im Diffusor enthalten ist, wobei der Speisestromkreis der LED geschlossen wird, wenn die Scheibe (6) zum Öffnen und Schließen der Luftstromeinlässe in eine Öffnungsposition derselben gesetzt wird.

## Revendications

1. Diffuseur pour produits désodorisants du type composé d'un corps (2) pouvant contenir une certaine quantité de produit désodorisant et muni d'un moyen (15) permettant son application en liaison avec un trou d'aération d'un véhicule, ledit diffuseur présentant des ouvertures (5, 13) pour l'entrée et la sortie d'un flux d'air capable d'atteindre ce produit désodorisant, qui est introduit à l'intérieur d'une enveloppe, **caractérisé en ce que** ladite enveloppe est composée d'une membrane semi-imperméable permettant le passage des molécules d'huile parfumée lorsqu'elle est atteinte par un flux d'air, et **en ce que** les ouvertures d'entrée du flux d'air (5) sont prévues dans la paroi inférieure du diffuseur et **en ce que** les ouvertures de sortie de l'air parfumé (13) sont prévues dans la paroi latérale, près du bord supérieur de celle-ci.

2. Diffuseur pour produits désodorisants selon la revendication 1, **caractérisé en ce que**, pour commander ledit flux d'air, un disque troué (6) est prévu, placé en contact avec une paroi dans laquelle se trouvent des ouvertures (5) pour l'entrée du flux d'air, ledit disque peut être tourné d'une première position dans laquelle il ferme lesdites ouvertures d'entrée d'air à une seconde position dans laquelle il ouvre lesdites ouvertures.

3. Diffuseur pour produits désodorisants selon la revendication 2, **caractérisé en ce qu'**entre ladite base et ledit disque (6) qui ferme les ouvertures d'entrée d'air (5), il y a une pluralité d'orifices (14) percés dans une paroi du diffuseur permettant la sortie, dans l'environnement, du flux d'air provenant des trous d'aération.

4. Diffuseur pour produits désodorisants selon l'une quelconque des revendications précédentes, **caractérisé en ce que** des moyens lumineux (10) sont prévus afin d'être activés lorsque le diffuseur est en fonctionnement.

5. Diffuseur pour produits désodorisants selon la revendication 4, dans lequel lesdits moyens lumineux sont composés d'une diode électroluminescente (10) visible à travers le couvercle du diffuseur et alimentée par une pile (9) contenue dans ledit diffuseur, le circuit d'alimentation de ladite diode électroluminescente étant fermé lorsque ledit disque (6), d'ouverture et de fermeture des entrées de flux d'air, est amené dans une position d'ouverture de celui-ci.
